# EUROPÄISCHE PATENTSCHRIFT

(11) **EP 3 904 972 B1**
(45) Veröffentlichungstag und Bekanntmachung des Hinweises auf die Patenterteilung: **06.09.2023**
(21) Anmeldenummer: 20171827.7
(22) Anmeldetag: 28.04.2020
(51) Int. Cl.: G05B 13/02

(54) **VERFAHREN UND REGELEINRICHTUNG ZUM REGELN EINES TECHNISCHEN SYSTEMS**
METHOD AND CONTROL DEVICE FOR CONTROLLING A TECHNICAL SYSTEM
PROCÉDÉ ET DISPOSITIF POUR RÉGLER UN SYSTÈME TECHNIQUE

(43) Veröffentlichungstag der Anmeldung: 03.11.2021
(73) Patentinhaber: Siemens Aktiengesellschaft, 80333 München (DE)
(72) Erfinder: Albrecht, Sebastian, 85399 Hallbergmoos (DE); Nurkanovic, Armin, 80939 München (DE); Kast, Bernd, 89335 Ichenhausen (DE)
(74) Vertreter: Siemens Patent Attorneys

(56) Entgegenhaltungen:
- DE-A1-102014 212 747
- US-A1- 2016 147 203

## Beschreibung

Eine Steuerung von komplexen technischen Systemen, wie beispielsweise Robotern, Windturbinen, Gasturbinen, Motoren, Verbrennungskraftmaschinen, Fertigungsanlagen oder Energieübertragungsnetzen, basiert meist auf einer Vielzahl von Regelkreisläufen zur Regelung von Aktionen des technischen Systems oder seiner Komponenten.

Die Regelungen sind meist danach ausgelegt, eine Performanz des technischen Systems, zum Beispiel seine Leistung, seine Genauigkeit, seine Geschwindigkeit, seinen Ressourcenverbrauch, seinen Schadstoffausstoß oder eine Kombination hiervon nach vorgegebenen Kriterien zu optimieren.

In vielen Fällen können sich jedoch diese Kriterien während der Ausführung von Aktionen oder abhängig von Betriebszuständen ändern. So beispielsweise bei einem Roboterarm, der ein kleines Objekt greifen soll. Solange sich der Roboterarm in größerer Entfernung zum Objekt befindet, muss seine Bewegungstrajektorie nicht besonders genau geregelt werden. Stattdessen kann eher die Bewegungsgeschwindigkeit erhöht werden. Diese Präferenz ändert sich, sobald der Roboterarm in die Nähe des Objekts gelangt und dieses greifen soll.

Gegenwärtig werden Regler häufig derart konfiguriert, dass das resultierende Regelungsverfahren unter möglichst vielen oder allen Betriebsbedingungen die jeweiligen Kriterien erfüllt. Die konfigurierenden Regelparameter oder Meta-Parameter werden dabei oft von Experten manuell ermittelt. Die resultierenden Regelparameter sind aber häufig für viele Betriebsbedingungen unnötig konservativ.

Weiterhin ist bekannt, dass zur Berücksichtigung von wechselnden Regelungskriterien verschiedene Sätze von Regelparametern benutzt werden. Die Ermittlung solcher Sätze von Regelparametern erfordert jedoch häufig einen hohen Aufwand. Darüber hinaus ist ein Wechsel der Regelparameter oft an starre Vorgaben gebunden und mithin nur wenig flexibel.

Aus der Publikation DE102014212747A1 ist ferner ein Assistenzsystem bekannt, bei dem ein Benutzer bei der Steuerungsoptimierung für ein technisches System durch Simulationen interaktiv unterstützt wird.

Es ist Aufgabe der vorliegenden Erfindung, ein Verfahren und eine Regeleinrichtung zum Regeln eines technischen Systems anzugeben, die besser an unterschiedliche Betriebsbedingungen adaptierbar sind.

Gelöst wird diese Aufgabe durch ein Verfahren mit den Merkmalen des Patentanspruchs 1 durch eine Regeleinrichtung mit den Merkmalen des Patentanspruchs 9, durch ein Computerprogrammprodukt mit den Merkmalen des Patentanspruchs 10 sowie durch ein computerlesbares Speichermedium, mit den Merkmalen des Patentanspruchs 11.

Zum Regeln eines technischen Systems werden Zustandsdaten des technischen Systems erfasst und in einen Regler eingespeist, dessen Regelungsverfahren durch einen Regelparameter konfigurierbar ist. Der Regelparameter kann hierbei insbesondere auch ein mehrdimensionaler Parametervektor in einem Parameterraum sein. Das technische System wird durch den Regler abhängig von den Zustandsdaten in einer ersten Regelschleife gemäß dem Regelungsverfahren geregelt. Weiterhin werden einen aktuellen Rechenaufwand des Reglers quantifizierende Aufwandsdaten erfasst und zu einem Regelungsplaner übermittelt. Durch den Regelungsplaner wird abhängig von den Aufwandsdaten ein aktualisierter Regelparameter ermittelt, durch den das hiermit konfigurierte Regelungsverfahren gemäß einem vorgegebenen, eine Performanz des Reglers und/oder des technischen Systems quantifizierendes Performanzmaß aktuell performanter wird als durch den bisherigen Regelparameter. Ein solches Performanzmaß kann insbesondere eine Regelungsgenauigkeit, eine Regelungsgeschwindigkeit, eine Ausführungsgenauigkeit, eine Ausführungsgeschwindigkeit und/oder eine gewichtete Kombination hiervon betreffen. Der Regler wird dann durch den aktualisierten Regelparameter rekonfiguriert.

Zum Ausführen des erfindungsgemäßen Verfahrens sind eine Regeleinrichtung, ein Computerprogrammprodukt sowie ein computerlesbares, vorzugsweise nichtflüchtiges Speichermedium vorgesehen.

Das erfindungsgemäße Verfahren sowie die erfindungsgemäße Regeleinrichtung können beispielsweise mittels eines oder mehrerer Computer, Prozessoren, anwendungsspezifischer integrierter Schaltungen (ASIC), digitaler Signalprozessoren (DSP) und/oder sogenannter "Field Programmable Gate Arrays" (FPGA) ausgeführt bzw. implementiert werden.

Ein Vorteil der Erfindung ist insbesondere darin zu sehen, dass die Regelung in vielen Fällen durch automatisches Rekonfigurieren des Reglers auf Änderungen von Betriebsbedingungen in optimierter oder zumindest vorteilhafter Weise reagieren kann. Insbesondere kann eine erfindungsgemäße Regelung einen sich ändernden Rechenaufwand des Reglers in vorteilhafter Weise berücksichtigen. So bedingt eine genauere Regelung häufig einen höheren Rechenaufwand des Reglers. In solchen Fällen kann beispielsweise beim optimierten Abstimmen einer Regelungsgenauigkeit mit einer Ausführungsgeschwindigkeit einer Aktion bei aktuell hoher Rechenlast die Regelungsgenauigkeit temporär mit erhöhten Optimierungskosten belegt werden. Es ist zu beobachten, dass die Erfindung in besonders vorteilhafter Weise auf Regler angewandt werden kann, die einen verhältnismäßig hohen Rechenaufwand erfordern, wie beispielsweise auf modellprädiktive Regler oder MPC-Regler (MPC: Model Predictive Control).

Vorteilhafte Ausführungsformen und Weiterbildungen der Erfindung sind in den abhängigen Ansprüchen angegeben.

Gemäß einer vorteilhaften Ausführungsform der Erfindung können als Aufwandsdaten eine Prozessorlast, eine Temperatur, eine Ressourcennutzung, eine Programmlaufzeit und/oder ein Zeitbedarf des Reglers erfasst werden. Die vorstehenden Aufwandsdaten quantifizieren einen aktuellen Rechenaufwand des Reglers und lassen sich häufig auf einfache Weise messen oder anderweitig erfassen. Darüber hinaus können auch andere vom Rechenaufwand des Reglers abhängige oder dadurch bedingte Größen als Aufwandsdaten erfasst werden. Vorzugsweise können Aufwandsdaten erfasst werden, die eine Hardware des Reglers betreffen.

Nach einer weiteren vorteilhaften Ausführungsform der Erfindung können das Erfassen der Aufwandsdaten, das Ermitteln des aktualisierten Regelparameters und das Rekonfigurieren des Reglers in einer zweiten Regelschleife ausgeführt werden. Auf diese Weise kann das Regelungsverfahren in automatischer Weise dynamisch an eine aktuelle Rechenlast des Reglers adaptiert werden

Weiterhin können auch Zustandsdaten des technischen Systems zum Regelungsplaner übermittelt und der aktualisierte Regelparameter abhängig von diesen Zustandsdaten ermittelt werden. Durch eine zusätzliche Berücksichtigung von aktuellen Zustandsdaten können Regelparameter in vielen Fällen besser an aktuelle Betriebszustände des technischen Systems angepasst werden.

Gemäß einer weiteren vorteilhaften Ausführungsform der Erfindung kann durch den Regelungsplaner ein erste Regelparameter umfassender Parameterbereich derart ermittelt werden, dass das durch die ersten Regelparameter jeweils konfigurierte Regelungsverfahren eine gemäß dem Performanzmaß bessere Performanz aufweist als das durch andere Regelparameter jeweils konfigurierte Regelungsverfahren. Der Parameterbereich kann insbesondere als Bereich oder allgemein als Teilmenge eines Parameterraums für den Regelparameter aufgefasst werden. Eine Zuordnung von ersten Regelparametern zum Parameterbereich kann beispielsweise anhand eines Vergleichs der jeweils resultierenden Performanzmaße erfolgen.

Nach Ermittlung des Parameterbereichs kann eine Suche nach dem aktualisierten Regelparameter in der Regel auf den ermittelten Parameterbereich beschränkt werden. Mithin kann der Parameterbereich durch den Regelungsplaner vorteilhafterweise vorab ermittelt werden, um im Hinblick auf die Suche nach dem aktualisierten Regelparameter bereits im Vorfeld suboptimale Regelparameter auszuschließen.

Vorzugsweise können für einen jeweiligen Regelparameter verschiedene, eine resultierende Performanz betreffende Performanzgrößen ermittelt werden. Die Performanzgrößen können insbesondere spezifisch für verschiedene Zustände des technischen Systems und/oder für unterschiedliche Rechenlasten des Reglers ermittelt werden. Dem Parameterbereich können dann diejenigen Regelparameter zugeordnet werden, bei denen eine Performanzgröße im Wesentlichen nicht verbessert werden kann, ohne dabei eine andere Performanzgröße zu verschlechtern. Regelparameter, die die vorstehende Bedingung nicht erfüllen können, entsprechend vom Parameterbereich ausgeschlossen werden.

Als Parameterbereich kann vorzugsweise eine Pareto-Menge insbesondere bezüglich der Performanzgrößen und/oder des Performanzmaßes ermittelt werden. Eine solche Pareto-Menge wird häufig auch als Pareto-Front bezeichnet. Die Elemente einer Pareto-Menge erfüllen die obige Bedingung, insofern eine jeweilige Zieleigenschaft nicht verbessert werden kann, ohne dabei eine andere Zieleigenschaft zu verschlechtern. Zur Ermittlung einer Pareto-Menge sind eine Vielzahl von Optimierungsverfahren verfügbar.

Nach Ermittlung des Parameterbereichs kann der aktualisierte Regelparameter abhängig von den Zustandsdaten und/oder den Aufwandsdaten aus dem Parameterbereich selektiert werden. Insofern der Parameterbereich in vielen Fällen gegenüber dem vollen Parameterraum stark eingeschränkt werden kann, verringert sich in der Regel ein Aufwand zur Ermittlung des aktualisierten Regelparameters beträchtlich. In vielen Fällen können deshalb die Ermittlung des aktualisierten Regelparameters sowie die Rekonfiguration des Reglers im laufenden Betrieb des Reglers erfolgen.

Nach einer weiteren vorteilhaften Ausführungsform der Erfindung kann der Regler Zustandsdaten zeitlich extrapolieren und das technische System abhängig von den zeitlich extrapolierten Zustandsdaten regeln. Zur zeitlichen Extrapolation kann der Regler ein Prozessmodell nutzen, das ein zeitliches Verhalten des technischen Systems oder einer seiner Komponenten über einen vorgegebenen Zeithorizont modelliert. Für derartige prognosebasierten Regelungen können insbesondere modellprädiktive Regler oder MPC-Regler eingesetzt werden.

Ein Ausführungsbeispiel der Erfindung wird nachfolgend anhand der Zeichnung näher erläutert. Dabei zeigen jeweils in schematischer Darstellung:
- Figur 1:: Eine erfindungsgemäße Regeleinrichtung beim Regeln eines technischen Systems und
- Figur 2:: eine detailliertere Darstellung der erfindungsgemäßen Regeleinrichtung.

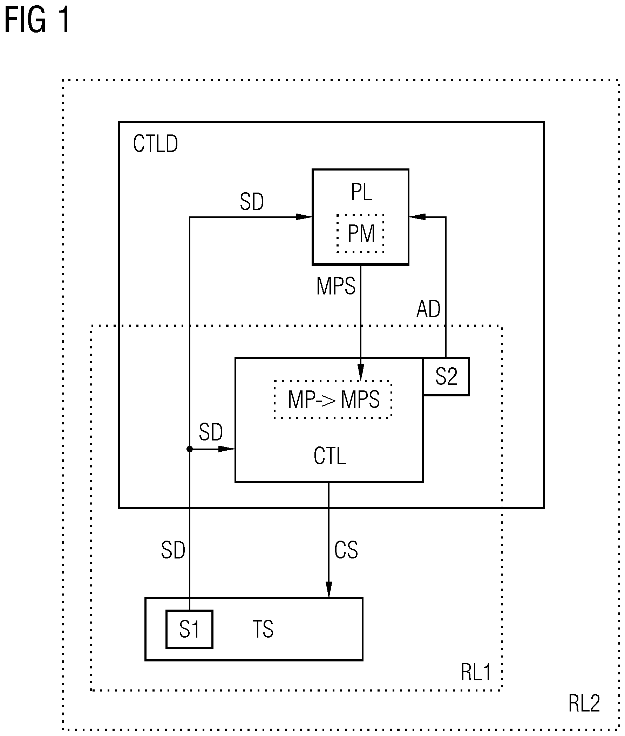

Figur 1 veranschaulicht schematisch eine erfindungsgemäße Regeleinrichtung CTLD beim Regeln eines technischen Systems TS. Als technisches System TS kann beispielsweise ein Roboter, eine Windturbine, eine Gasturbine, ein Motor, eine Verbrennungskraftmaschine, eine Fertigungsanlage, ein Energieübertragungsnetz oder eine andere Maschine, ein anderes Gerät oder eine andere Anlage geregelt werden. Das technische System TS kann insbesondere auch eine Komponente oder ein anderer Teil eines technischen Systems oder ein simuliertes technisches System oder eine simulierte Komponente eines technischen Systems sein.

Für das vorliegende Ausführungsbeispiel sei angenommen, dass das technische System TS ein Roboter ist, und dass die Regeleinrichtung CTLD beispielhaft eine Bewegung eines Roboterarms regelt.

Die Regeleinrichtung CTLD weist einen Prozessor zum Ausführen des erfindungsgemäßen Verfahrens sowie einen Speicher zum Speichern von zu verarbeitenden Daten auf. Die Regeleinrichtung CTLD ist in Figur 1 extern zum technischen System TS dargestellt. Alternativ kann die Regeleinrichtung CTLD auch ganz oder teilweise in das technische System TS integriert sein.

Das technische System TS verfügt über eine erste Sensorik S1 mit einem oder mehreren Prozesssensoren zum Erfassen oder Messen von Zustandsdaten SD des technischen Systems TS.

Die Zustandsdaten SD quantifizieren einen Betriebszustand des technischen Systems TS, einen dort ablaufenden Prozess oder andere für den Betrieb des technischen Systems TS relevante Größen. Die Zustandsdaten SD können beispielsweise Positionsdaten, Bewegungsdaten, Prozessdaten oder physikalische Daten, wie Temperatur, Druck, Kraftaufwand, Krafteinwirkung, Drehmoment, Strom, Spannung und/oder Leistung des technischen Systems TS oder von dessen Komponenten umfassen. Insbesondere können als Zustandsdaten SD Daten über im Betrieb zu optimierende Zielgrößen des technischen Systems TS erfasst werden, wie beispielsweise ein Ressourcenverbrauch, Vibrationen oder eine Präzision von Aktionen. Weiterhin können die Zustandsdaten SD auch optische Daten umfassen, die von einer Kamera oder einem anderen optischen Sensor der ersten Sensorik S1 erfasst werden. Darüber hinaus, können als Zustandsdaten SD auch andere für den Betrieb des technischen Systems TS relevante Einflussfaktoren erfasst werden, wie insbesondere Daten über eine Umgebung des technischen Systems TS.

Durch die erste Sensorik S1 werden aktuelle Zustandsdaten SD fortlaufend erfasst, insbesondere beim Ausführen von geregelten Aktionen des technischen Systems, wie beispielsweise während der Bewegung des Roboterarms. Die aktuell erfassten Zustandsdaten SD, die zum Beispiel eine aktuelle Position des Roboterarms betreffen können, werden als Regelgrößen in einen Regler CTL der Regeleinrichtung CTLD eingespeist, der abhängig davon Stellsignale CS für das technische System TS erzeugt. Die erzeugten Stellsignale CS werden zum Regeln des technischen Systems TS an dieses ausgegeben. Die Stellsignale CS können beispielsweise einen Motor des Roboterarms ansteuern.

Die Erfassung der aktuellen Zustandsdaten SD und ihre Zuführung zum Regler CTL, die Erzeugung der Stellsignale CS und die Ansteuerung des technischen Systems TS durch die Stellsignale CS, bildet eine geschlossene erste Regelschleife RL1. Letztere kann beispielsweise als Regelschleife einer modellprädiktiven Regelung implementiert sein. Eine solche modellprädiktive Regelung verwendet ein Prozessmodell zur Modellierung und zeitlichen Extrapolation eines Verhaltens des technischen Systems über einen vorgegebenen Zeithorizont. Das technische System kann dann abhängig von dem extrapolierten Verhalten in vorausschauender Weise geregelt werden.

Der Regler CTL führt ein Regelungsverfahren aus, das durch mindestens einen Regelparameter MP konfigurierbar ist. Ein solcher Regelparameter wird häufig auch als Meta-Parameter bezeichnet und wird vorzugsweise als mehrdimensionaler Parametervektor in einem Parameterraum dargestellt. Durch den Regelparameter MP können beispielsweise eine Abtastrate eines modellprädiktiven Reglers, ein Typ oder eine Genauigkeit einer numerischen Integrationsmethode, ein Typ oder eine Genauigkeit einer numerischen Approximation, eine Größe oder eine Genauigkeit einer zur Optimierung zu verwendenden Hesse-Matrix, ein oder mehrere Prozessparameter, ein Startwert oder eine Toleranz einer Optimierungsmethode und/oder ein Typ oder ein Rauschverhalten eines Sensors eingestellt oder konfiguriert werden. Der Regelparameter MP beeinflusst dabei in vielen Fällen einen regelungsbedingten Rechenaufwand des Reglers CTL.

Erfindungsgemäß umfassen die Regeleinrichtung CTLD oder der Regler CTL eine zweite Sensorik S2 zum fortlaufenden Erfassen oder Messen von aktuellen Aufwandsdaten AD, die einen aktuellen, insbesondere regelungsbedingten Rechenaufwand des Reglers CTL quantifizieren.

Die Aufwandsdaten AD können insbesondere eine Prozessorlast, eine Temperatur, eine Ressourcennutzung, eine Programmlaufzeit, einen Zeitbedarf, einen Stromverbrauch und/oder andere eine Hardware des Reglers CTL betreffende Aufwandsgrößen quantifizieren.

Die zweite Sensorik S2 ist vorzugsweise an die Hardware des Reglers CTL gekoppelt und kann beispielsweise einen an einen Prozessor des Reglers CTL angeordneten Temperatursensor umfassen. Alternativ oder zusätzlich kann die zweite Sensorik eine aktuelle Prozessorlast des Reglers CTL erfassen oder vom Betriebssystem abrufen.

Die aktuellen Aufwandsdaten AD und die aktuellen Zustandsdaten SD werden von der zweiten Sensorik S2 zu einem Regelungsplaner PL übermittelt. Der Regelungsplaner PL dient zum Ermitteln von optimierten Regelparametern zum Konfigurieren des Reglers CTL. Der Regelungsplaner PL optimiert die Regelparameter gemäß einem Performanzmaß PM, das eine Performanz des Reglers CTL bzw. seines Regelungsverfahrens und/oder eine Performanz des technischen Systems TS quantifiziert. Das Performanzmaß PM stellt also eine durch den Regelungsplaner PL im Rahmen eines Optimierungsverfahrens zu optimierende Zielgröße dar.

Das Performanzmaß PM kann beispielsweise eine Reglungsgenauigkeit, eine Regelungsgeschwindigkeit, eine Reaktionsgeschwindigkeit, eine Ausführungsgenauigkeit, eine Ausführungsgeschwindigkeit und/oder eine gewichtete Kombination der vorstehenden Größen quantifizieren. Insbesondere kann das Performanzmaß PM auch eine Performanz des technischen Systems TS betreffen, zum Beispiel eine Energieproduktion, einen Energieverbrauch, Vibrationen, einen Schadstoffausstoß und/oder eine Präzision von auszuführenden Aktionen.

Durch den Regelungsplaner PL wird - abhängig von den aktuellen Aufwandsdaten AD und den aktuellen Zustandsdaten SD - ein aktualisierter Regelparameter MPS ermittelt, der zu einem optimierten oder besonderes hohen Performanzmaß PM führt. Bei dieser Optimierung wird durch den Regelungsplaner PL vorzugsweise ein Modell des Reglers CTL verwendet, durch das der Rechenaufwand des Reglers CTL zur Performanz des Reglers CTL oder des technischen Systems TS sowie zum Zustand des technischen Systems TS in Beziehung gesetzt wird. Auf diese Weise kann der aktualisierte Regelparameter MPS anhand der aktuellen Zustandsdaten SD an aktuelle Betriebszustände des technischen Systems TS und anhand der aktuellen Aufwandsdaten AD an eine aktuelle Rechenlast des Reglers CTL angepasst werden.

Zur Implementierung des Regelungsplaners PL sind eine Vielzahl von optimierenden Planungsprogrammen verfügbar. Mit diesen lassen sich Planungsaufgaben beispielsweise mittels geeigneter Beschreibungssprachen wie PDDL (Planning Domain Definition Language) oder OWL (Web Ontology Language) in maschinenlesbarer Weise ausdrücken und automatisiert verarbeiten. Ausgehend von einem Performanzmaß kann ein solcher Planer performanzoptimierte Regelparameter mit bekannten Optimierungsverfahren ermitteln.

Der aktualisierte Regelparameter MPS wird vom Regelungsplaner PL zum Regler CTL übermittelt. Der Regler CTL wird durch die aktualisierten Regelparameter MPS rekonfiguriert und das Regelungsverfahren und damit die erste Regelschleife RL1 in optimierter Weise an den aktuellen Betriebszustand des technischen Systems TS und and die aktuelle Rechenlast des Reglers CTL adaptiert.

Durch die Erfassung der aktuellen Zustandsdaten SD und Aufwandsdaten AD, ihrer Zuführung zum Regelungsplaner PL, der Ermittlung des aktualisierten Regelparameters MPS sowie der Rekonfiguration des Reglers CTL wird im laufenden Betrieb eine zweite Regelschleife RL2 geschlossen.

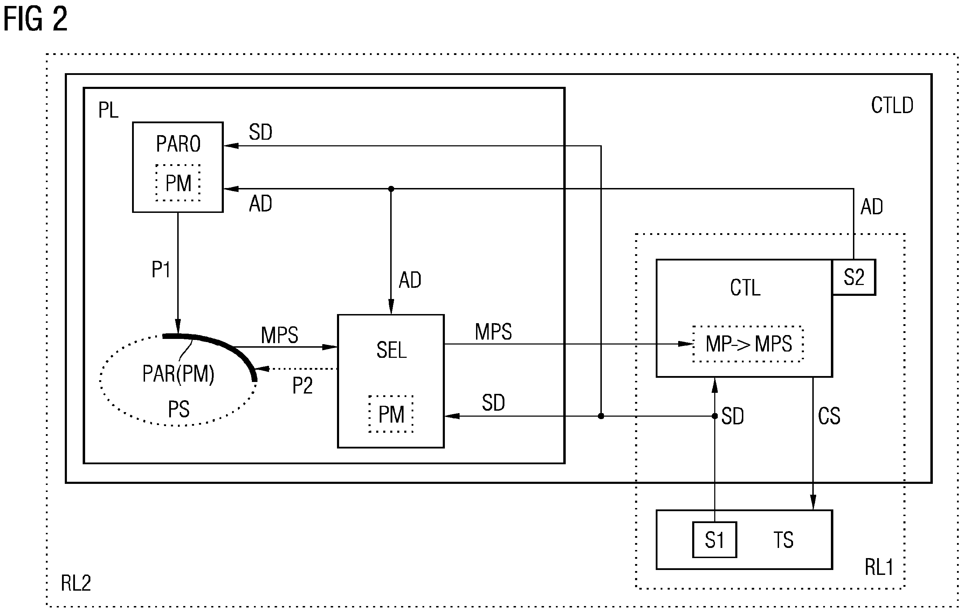

Figur 2 zeigt die erfindungsgemäße Regeleinrichtung CTLD mit einer detaillierteren Darstellung des Regelungsplaners PL.

Insofern in Figur 2 die gleichen oder korrespondierende Bezugszeichen wie in Figur 1 verwendet werden, bezeichnen diese Bezugszeichen die gleichen oder korrespondierende Entitäten, die insbesondere wie oben beschrieben implementiert oder ausgestaltet sein können.

Wie oben bereits ausgeführt, regelt der durch den Regelparameter MP konfigurierte Regler CTL das technische System TS abhängig von den aktuell gemessenen Zustandsdaten SD durch Ausgabe von Stellsignalen CS in einer ersten Regelschleife RL1.

Wie oben weiterhin ausgeführt, werden die aktuellen Zustandsdaten SD sowie aktuelle, von der zweiten Sensorik S2 gemessene Aufwandsdaten AD zum Regelungsplaner PL übermittelt, der abhängig von den aktuellen Zustandsdaten SD und den aktuellen Aufwandsdaten AD einen aktualisierten Regelparameter MPS ermittelt.

Zu diesem Zweck wird vom Regelungsplaner PL ein Reglermodell zur Prognose eines regelparameterabhängigen Rechenaufwands des Reglers CTL innerhalb eines vorgebbaren Prognosehorizonts verwendet. Hierfür sind eine Vielzahl effizienter Reglermodelle verfügbar. Ein solches Reglermodell kann insbesondere modellieren, angeben und/oder quantifizieren, wie sich ein Rechenaufwand des Reglers CTL bei Veränderung einer Regelungsgenauigkeit und/oder einer Regelungsgeschwindigkeit verhält. In der Regel erhöht sich mit der Regelungsgenauigkeit und/oder der Regelungsgeschwindigkeit auch der Rechenaufwand. Mit Hilfe des Reglermodells wird der aktualisierte Regelparameter MPS derart bestimmt, dass das hiermit konfigurierte Regelungsverfahren seine durch das Performanzmaß PM quantifizierte Performanz in einer jeweils aktuellen Situation erhöht.

Beispielsweise kann bei aktuell hoher Rechenlast des Reglers CTL seine Regelungsgenauigkeit temporär abgesenkt werden, um stattdessen eine Ausführungsgeschwindigkeit einer Aktion des technischen Systems TS zu steigern und so eine Performanz zu erhöhen.

Das Reglermodell umfasst oder modelliert gewissermaßen ein prozedurales Wissen über Wirkungszusammenhänge oder Abhängigkeiten zwischen Performanz oder Zustandsänderungen des Reglers CTL oder des technischen Systems TS und einem jeweils erforderlichen Rechenaufwand des Reglers CTL.

Demgegenüber können die als Kriterien für die Ermittlung des aktualisierten Regelparameters MPS dienenden Zustandsdaten SD und Aufwandsdaten AD als deklaratives Wissen über das technische System TS oder den Regler CTL aufgefasst werden.

Zur Durchführung von Vorabberechnungen in einer ersten Phase P1 des erfindungsgemäßen Verfahrens umfasst der Regelungsplaner PL einen Pareto-Optimierer PARC. Durch den Pareto-Optimierer PARO wird anhand des Performanzmaßes PM mittels des Reglermodells vorab eine sogenannte Pareto-Menge PAR ermittelt. Die Pareto-Menge PAR ist eine Teilmenge eines mögliche Regelparameter umfassenden Parameterraums PS.

Eine solche Pareto-Menge umfasst diejenigen Parameter eines Parameterraums, bei denen eine Performanzgröße, beispielsweise eine Regelungsgenauigkeit nicht verbessert werden kann, ohne dabei eine andere Performanzgröße, beispielsweise einen Rechenaufwand, zu verschlechtern. Eine Pareto-Menge wird häufig auch als Pareto-Front bezeichnet

Die in der Pareto-Menge PAR enthaltenen Regelparameter führen dann in der Regel zu einer besseren oder zumindest zu keiner schlechteren Performanz als andere Regelparameter des Parameterraums PS. Auf diese Weise können bereits im Vorfeld, d.h. hier in der ersten Phase P1, suboptimale Regelparameter oder zumindest zu keiner Verbesserung führende Regelparameter ausgeschlossen werden. Zur Ermittlung der Pareto-Menge PAR stehen mehrere bekannte Verfahren zur Verfügung.

Falls die Regelparameter mehrdimensionale Parametervektoren im Parameterraum PS sind, kann die Pareto-Menge PAR eine Hyperfläche oder eine andere ausgewählte Teilmenge des Parameterraums PS sein. In vielen Fällen ist die Pareto-Menge PAR sehr stark gegenüber dem gesamten Parameterraum PS eingeschränkt.

Die Pareto-Menge PAR wird im vorliegenden Ausführungsbeispiel abhängig von Zustandsdaten SD und Aufwandsdaten AD bestimmt, die zu diesem Zweck zum Pareto-Optimierer PARO übermittelt werden. Durch die Berücksichtigung der Zustandsdaten SD und der Aufwandsdaten AD kann die Pareto-Menge PAR besser an eine Betriebssituation des technischen Systems TS und/oder an eine Rechenkapazität des Reglers CTL angepasst werden.

Aus der in der ersten Phase P1 ermittelten Pareto-Menge PAR wird während des normalen Regelungsbetriebes - im Folgenden auch als zweite Phase P2 bezeichnet - ein die Performanz optimierender, aktualisierter Regelparameter MPS mittels eines Selektionsmoduls SEL des Regelungsplaners PL selektiert. Zu diesem Zweck werden zum Selektionsmodul SEL die aktuellen Zustandsdaten SD und die aktuellen Aufwandsdaten AD übermittelt.

Das Selektionsmodul SEL selektiert abhängig von den aktuellen Zustandsdaten SD und den aktuellen Aufwandsdaten AD einen aktualisierten Regelparameter MPS, durch den das Performanzmaß PM in der aktuellen - durch die Zustandsdaten SD und die Aufwandsdaten AD - spezifizierten Situation optimiert oder zumindest einem Optimum angenähert wird. Vorteilhafterweise wird derjenige Regelparameter aus der Pareto-Menge PAR als aktualisierter Regelparameter MPS selektiert, der in der aktuellen Situation zum Besten durch das Performanzmaß PM quantifizierten Kompromiss zwischen Regelungsperformanz, Regelungsstabilität und Regelungsberechnungsaufwand führt. Insbesondere kann aus der Pareto-Menge PAR derjenige Regelparameter, der zum höchsten Performanzmaß PM führt, als aktualisierter Regelparameter MPS selektiert werden.

Die Selektion erfolgt insbesondere mittels des Prognosemodells für den Rechenaufwand des Reglers CTL sowie mittels des Prozessmodells für das Verhalten des technischen System TS. Anhand der aktuellen Zustandsdaten SD kann die Selektion des aktualisierten Parameters MPS an aktuelle Betriebszustände des technischen Systems adaptiert werden und anhand der aktuellen Aufwandsdaten AD an eine aktuelle Rechenlast des Reglers CTL.

Der vom Selektionsmodul SEL ermittelte aktualisierte Parameter MPS wird vom Selektionsmodul SEL zum Regler CTL übermittelt, um diesen, wie oben beschrieben, in einer zweiten Regelschleife RL2 im laufenden Betrieb zu rekonfigurieren.

Da die Pareto-Menge PAR gegenüber dem vollen Parameterraum PS in der Regel stark eingeschränkt ist, verringert sich der Aufwand zur Selektion des optimierten Regelparameters MPS in der zweiten Phase P2 beträchtlich. In vielen Fällen kann deshalb die Selektion des aktualisierten Regelparameters MPS sowie die Rekonfiguration des Reglers CTL im laufenden Betrieb und in Echtzeit ausgeführt werden.

Somit kann das Regelungsverfahren in automatischer und optimierter Weise dynamisch an Änderungen der Rechenlast des Reglers CTL, an Änderungen der Betriebssituation und/oder an Änderungen von Perfomanzvorgaben adaptiert werden. Eine solche dynamische Adaption von Regelparametern erlaubt es in vielen Fällen, die Regeleinrichtung CTLD unter mehr Betriebsbedingungen einzusetzen, als sie ursprünglich konfiguriert war. Häufig können deshalb technische Systeme nach größeren Störungen schneller stabilisiert und unerwünschte Abschaltungen vermieden werden.

## Patentansprüche

1. Computerimplementiertes Verfahren zum Regeln eines technischen Systems (TS), wobei
a) ein Regler (CTL) bereitgestellt wird, dessen Regelungsverfahren durch einen Regelparameter (MP) konfigurierbar ist,
b) Zustandsdaten (SD) des technischen Systems (TS) erfasst und in den Regler (CTL) eingespeist werden,
c) das technische System (TS) durch den Regler (CTL) abhängig von den Zustandsdaten (SD) in einer ersten Regelschleife (RL1) gemäß dem Regelungsverfahren geregelt wird,
d) einen aktuellen Rechenaufwand des Reglers (CTL) quantifizierende Aufwandsdaten (AD) erfasst und zu einem Regelungsplaner (PL) übermittelt werden,
e) durch den Regelungsplaner (PL) abhängig von den Aufwandsdaten (AD) ein aktualisierter Regelparameter (MPS) ermittelt wird, durch den das hiermit konfigurierte Regelungsverfahren gemäß einem vorgegebenen, eine Performanz des Reglers (CTL) und/oder des technischen Systems (TS) quantifizierendes Performanzmaß (PM) aktuell performanter wird als durch den bisherigen Regelparameter (MP), und
f) der Regler (CTL) durch den aktualisierten Regelparameter (MPS) rekonfiguriert wird.

2. Verfahren nach Anspruch 1, **dadurch gekennzeichnet, dass** als Aufwandsdaten (AD) eine Prozessorlast des Reglers (CTL), eine Temperatur des Reglers (CTL), eine Ressourcennutzung des Reglers (CTL), eine Programmlaufzeit des Reglers (CTL) und/oder ein Zeitbedarf des Reglers (CTL) erfasst werden.

3. Verfahren nach einem der vorhergehenden Ansprüche, **dadurch gekennzeichnet,**
**dass** das Erfassen der Aufwandsdaten (AD), das Ermitteln des aktualisierten Regelparameters (MPS) und das Rekonfigurieren des Reglers (CTL) in einer zweiten Regelschleife (RL2) ausgeführt wird.

4. Verfahren nach einem der vorhergehenden Ansprüche, **dadurch gekennzeichnet,**
**dass** Zustandsdaten (SD) des technischen Systems (TS) zum Regelungsplaner (PL) übermittelt werden, und
**dass** der aktualisierte Regelparameter (MPS) abhängig von diesen Zustandsdaten (SD) ermittelt wird.

5. Verfahren nach einem der vorhergehenden Ansprüche, **dadurch gekennzeichnet,**
**dass** durch den Regelungsplaner (PL) ein erste Regelparameter umfassender Parameterbereich (PAR) derart ermittelt wird,
**dass** das durch die ersten Regelparameter jeweils konfigurierte Regelungsverfahren eine gemäß dem Performanzmaß (PM) bessere Performanz aufweist als das durch andere Regelparameter jeweils konfigurierte Regelungsverfahren.

6. Verfahren nach Anspruch 5, **dadurch gekennzeichnet,**
**dass** als erster Parameterbereich eine Pareto-Menge (PAR) ermittelt wird.

7. Verfahren nach Anspruch 5 oder 6, **dadurch gekennzeichnet**, der aktualisierte Regelparameter (MPS) abhängig von den Zustandsdaten (SD) und/oder den Aufwandsdaten (AD) aus dem ermittelten ersten Parameterbereich (PAR) selektiert wird.

8. Verfahren nach einem der vorhergehenden Ansprüche, **dadurch gekennzeichnet,**
**dass** der Regler (CTL) Zustandsdaten (SD) zeitlich extrapoliert und das technische System (TS) abhängig von den zeitlich extrapolierten Zustandsdaten regelt.

9. Regeleinrichtung (CTLD) zum Regeln eines technischen Systems (TS) eingerichtet zum Ausführen eines Verfahrens nach einem der vorhergehenden Ansprüche.

10. Computerprogrammprodukt eingerichtet zum Ausführen eines Verfahrens nach einem der Ansprüche 1 bis 8.

11. Computerlesbares Speichermedium mit einem Computerprogrammprodukt nach Anspruch 10.

## Claims

1. Computer-implemented method for controlling a technical system (TS), wherein
a) a controller (CTL) is provided, the control method of which is configurable by a control parameter (MP),
b) state data (SD) of the technical system (TS) are captured and fed into the controller (CTL),
c) the technical system (TS) is controlled by the controller (CTL) on the basis of the state data (SD) in a first control loop (RL1), using the control method,
d) complexity data (AD) quantifying a present computation complexity for the controller (CTL) are captured and transmitted to a control planner (PL),
e) the control planner (PL) takes the complexity data (AD) as a basis for ascertaining an updated control parameter (MPS) that renders the control method configured thereby currently more performant, according to a predefined performance measure (PM) that quantifies a performance of the controller (CTL) and/or of the technical system (TS), than as a result of the previous control parameter (MP), and
f) the controller (CTL) is reconfigured by the updated control parameter (MPS).

2. Method according to Claim 1, **characterized in that** the complexity data (AD) captured are a processor load on the controller (CTL), a temperature of the controller (CTL), a resource use of the controller (CTL), a program runtime of the controller (CTL) and/or a time requirement of the controller (CTL).

3. Method according to either of the preceding claims, **characterized**
**in that** the capture of the complexity data (AD), the ascertainment of the updated control parameter (MPS) and the reconfiguration of the controller (CTL) are performed in a second control loop (RL2).

4. Method according to one of the preceding claims, **characterized**
**in that** state data (SD) of the technical system (TS) are transmitted to the control planner (PL), and
**in that** the updated control parameter (MPS) is ascertained on the basis of these state data (SD).

5. Method according to one of the preceding claims, **characterized**
**in that** the control planner (PL) ascertains a parameter range (PAR) comprising first control parameters in such a way that the control method configured in each case by the first control parameters has better performance, according to the performance measure (PM), than the control method configured in each case by other control parameters.

6. Method according to Claim 5, **characterized**
**in that** the first parameter range ascertained is a Pareto set (PAR).

7. Method according to Claim 5 or 6, **characterized**
**in that** the updated control parameter (MPS) is selected from the ascertained first parameter range (PAR) on the basis of the state data (SD) and/or the complexity data (AD).

8. Method according to one of the preceding claims, **characterized**
**in that** the controller (CTL) temporally extrapolates state data (SD) and controls the technical system (TS) on the basis of the temporally extrapolated state data.

9. Control device (CTLD) for controlling a technical system (TS) configured to perform a method according to one of the preceding claims.

10. Computer program product configured to perform a method according to one of Claims 1 to 8.

11. Computer-readable storage medium having a computer program product according to Claim 10.

## Revendications

1. Procédé mis en œuvre par ordinateur destiné au réglage d'un système technique (TS), dans lequel
a) un régulateur (CTL) est mis à disposition, dont le procédé de réglage est configurable par le biais d'un paramètre de réglage (MP),
b) des données d'état (SD) du système technique (TS) sont acquises et entrées dans le régulateur (CTL),
c) le système technique (TS) est réglé par le biais du régulateur (CTL) en fonction des données d'état (SD) dans une première boucle de réglage (RL1) conformément au procédé de réglage,
d) des données d'effort (AD) qualifiant un effort de calcul actuel du régulateur (CTL) sont acquises et transmises à un planificateur de réglage (PL),
e) un paramètre de réglage actualisé (MPS) est déterminé en fonction des données d'effort (AD) par le biais du planificateur de réglage (PL), planificateur de réglage par le biais duquel le procédé de réglage ainsi configuré conformément à une mesure de performance (PM) qualifiant une performance du régulateur (CTL) et/ou du système technique (TS) est actuellement plus performant que par le biais du paramètre de réglage précédent (MP), et
f) le régulateur (CTL) est reconfiguré par le biais du paramètre de réglage actualisé (MPS).

2. Procédé selon la revendication 1, **caractérisé en ce que** en tant que données d'effort (AD) une charge de processeur du régulateur (CTL), une température du régulateur (CTL), une utilisation de ressources du régulateur (CTL), une période de programme du régulateur (CTL) et/ou un temps nécessaire du régulateur (CTL) sont acquis.

3. Procédé selon l'une quelconque des revendications précédentes, **caractérisé en ce que**
l'acquisition des données d'effort (AD), la détermination du paramètre de réglage actualisé (MPS) et la reconfiguration du régulateur (CTL) sont mises à exécution dans une seconde boucle de réglage (RL2).

4. Procédé selon l'une quelconque des revendications précédentes, **caractérisé en ce que**
des données d'état (SD) du système technique (TS) sont transmises au planificateur de réglage (PL), et
**en ce que** le paramètre de réglage actualisé (MPS) est déterminé en fonction de ces données d'état (SD).

5. Procédé selon l'une quelconque des revendications précédentes, **caractérisé en ce que**
par le biais du planificateur de réglage (PL) une zone de paramètres (PAR) comportant un premier paramètre de réglage est déterminée de telle sorte que le procédé de réglage configuré respectivement par le biais des premiers paramètres de réglage présente conformément à la mesure de performance (PM) une meilleure performance que le procédé de réglage configuré respectivement par le biais d'autres paramètres de réglage.

6. Procédé selon la revendication 5, **caractérisé en ce que**
en tant que première zone de paramètres une quantité de Pareto (PAR) est déterminée.

7. Procédé selon la revendication 5 ou 6, **caractérisé en ce que**
le paramètre de réglage actualisé (MPS) est sélectionné en fonction des données d'état (SD) et/ou des données d'effort (AD) à partir de la première zone de paramètres déterminée (PAR) .

8. Procédé selon l'une quelconque des revendications précédentes, **caractérisé en ce que**
le régulateur (CTL) extrapole temporellement des données d'état (SD) et règle le système technique (TS) en fonction des données d'état extrapolées temporellement.

9. Dispositif de réglage (CTLD) destiné au réglage d'un système technique (TS) conçu pour la réalisation d'un procédé selon l'une quelconque des revendications précédentes.

10. Produit de programme informatique conçu pour la mise à exécution d'un procédé selon l'une quelconque des revendications 1 à 8.

11. Support de stockage lisible par ordinateur avec un produit de programme informatique selon la revendication 10.
